# EUROPEAN PATENT APPLICATION

(11) **EP 4 606 876 A1**
(43) Date of publication of application: **27.08.2025**
(21) Application number: 23919192.7
(22) Date of filing: 06.04.2023
(51) Int. Cl.: C10G 65/10, C10G 65/12, C10G 67/02, C10G 69/02, C10G 47/20, C10G 65/02, C10G 67/00, C10G 69/00

(54) **HYDROGENATION METHOD AND HYDROGENATION SYSTEM FOR HYDROCARBON OIL**

(30) Priority: 03.02.2023 CN 202310125964
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: DU, Yanze, Dalian, Liaoning 116045 (CN); CUI, Zhe, Dalian, Liaoning 116045 (CN); ZENG, Ronghui, Dalian, Liaoning 116045 (CN); PENG, Shaozhong, Dalian, Liaoning 116045 (CN); LIU, Chang, Dalian, Liaoning 116045 (CN); WU, Ziming, Dalian, Liaoning 116045 (CN)
(74) Representative: Hoffmann Eitle
(86) International application number: PCT/CN2023/086572
(87) International publication number: WO 2024/159622

(57) **Abstract**

The present invention belongs to the technical field of hydrocarbon oil hydrogenation. Disclosed are a hydrogenation method and a hydrogenation system for a hydrocarbon oil. The method comprises the following steps: (1) subjecting a hydrocarbon oil raw material to a first hydrocracking reaction in the presence of hydrogen, so as to obtain a first hydrocracking reaction product, wherein in the first hydrocracking reaction product, the mass content of a C₇⁺ n-alkane is 5% or below; (2) subjecting the first hydrocracking reaction product to a second hydrocracking reaction in the presence of hydrogen, so as to obtain a second hydrocracking reaction product; and (3) separating and fractionating the second hydrocracking reaction product. By taking a hydrocarbon oil as a raw material, the method can greatly improve the yield and quality of chemical raw materials (including a low-carbon olefin raw material and a reforming raw material).

## Description

### CROSS-REFERENCE TO RELATED APPLICATIONS

The application claims the benefit of the China patent application No. "202310125964.8", filed on February 3, 2023, the content of which is specifically and entirely incorporated herein by reference.

### TECHNICAL FIELD

The present invention relates to the technical field of hydrocarbon oil hydrogenation, in particular to a hydrogenation method and a hydrogenation system for a hydrocarbon oil.

### BACKGROUND ART

The ethylene industry is a core of the petrochemical industry, ethylene product constitutes more than 75% of petrochemical products, it is an important indicator of the petrochemical development level in a country. Therefore, increasing ethylene production capacity is an important approach for the petrochemical technology and product innovations. Ethylene cracking raw materials include naphtha and other liquid feedstock, and light hydrocarbon gas feedstock, wherein the light hydrocarbon gas feedstock has a larger share and a larger potential for increasing efficiency than the liquid feedstock.

Heavy naphtha is a main feedstock for a catalytic reformer, heavy naphtha has a high content of alkane in its composition, but it is difficult for the alkane to perform the cyclic dehydrogenation reaction, thus the alkane is not a beneficial feedstock component for the reformer.

Hydrocracking technology has the characteristics such as high feedstock adaptability, large flexibility of production operation and product scheme, and good product quality, can directly convert various heavy and inferior feedstock into high quality jet fuel, diesel, lubricating oil base material urgently needed in the market, the chemical naphtha, and feedstock which subjects to a steam cracking to produce ethylene by tail oil, has emerged as one of the most important deep processing technology of hydrocarbon oil in the modem refining and petrochemical industry, thus the technology is widely applied in various countries around the world.

CN201580070326.4 discloses a process for producing LPG and BTX, comprising: a) subjecting a mixed hydrocarbon stream to first hydrocracking in the presence of a first hydrocracking catalyst to produce a first hydrocracking product stream; b) separating the first hydrocracking product stream to provide at least a light hydrocarbon stream comprising at least C2 and C3 hydrocarbons, a middle hydrocarbon stream consisting of C4 and/or C5 hydrocarbons, and a heavy hydrocarbon stream comprising at least C6+ hydrocarbons, and c) subjecting the heavy hydrocarbon stream to second hydrocracking in the presence of a second hydrocracking catalyst to produce a second hydrocracking product stream comprising BTX, wherein the second hydrocracking is more severe than the first hydrocracking, d) wherein at least part of the middle hydrocarbon stream is subjected to C4 hydrocracking in the presence of a C4 hydrocracking catalyst to produce a C4 hydrocracking product stream, C4 hydrocracking optimized for converting C4 hydrocarbons into C3 hydrocarbons.

CN201480037272.7 discloses a process for the production of light olefins from a hydrocarbon feedstock, comprising the following steps: (a) feeding a hydrocarbon feedstock into a reaction area for ring opening; (b) separating reaction products, which are generated from said reaction area, into an overhead stream and a side stream; (c) feeding the side stream from (b) to a gasoline hydrocracker (GHC) unit; (d) separating the reaction products of said GHC of step (c) into an overhead stream, which contains hydrogen, methane, ethane, and liquefied petroleum gas, and a stream, which contains aromatic hydrocarbon compounds, and a small amount of hydrogen and non-aromatic hydrocarbon compounds; (e) feeding the overhead stream from the gasoline hydrocracker (GHC) unit into a steam cracker unit.

The above processes are mainly used for the production of LPG and BTX, while the ethylene feedstock is produced with low content of normal hydrocarbons, which also results in low yield of the three olefins in the steam cracking device for producing ethylene. Therefore, it has important significance to develop a hydrocracking process suitable for producing high-quality chemical raw materials by using hydrocarbon oil as the feedstock.

### SUMMARY OF THE INVENTION

The present invention aims to provide a hydrogenation method and hydrogenation system for a hydrocarbon oil. By taking a hydrocarbon oil as a raw material, the method can greatly improve the yield and quality of chemical raw materials (including a low-carbon olefin raw material and a reforming raw material).

The first aspect of the present invention provides a hydrogenation method for a hydrocarbon oil, the method comprises the following steps:
(1) Subjecting a hydrocarbon oil raw material to a first hydrocracking reaction in the presence of hydrogen, so as to obtain a first hydrocracking reaction product, wherein the mass content of a C₇⁺ n-alkane in the first hydrocracking reaction product is 5% or below;
(2) Subjecting the first hydrocracking reaction product to a second hydrocracking reaction in the presence of hydrogen, so as to obtain a second hydrocracking reaction product;
(3) Separating and fractionating the second hydrocracking reaction product.

The second aspect of the present invention provides a hydrogenation system for a hydrocarbon oil, the system comprises a first hydrocracking catalyst bed, a second hydrocracking catalyst bed, a gas-liquid separation unit, and a fractionation unit arranged in sequence along the direction of material flow;

Wherein the first hydrocracking catalyst bed is loaded with a first hydrocracking catalyst, and the second hydrocracking catalyst bed is loaded with a second hydrocracking catalyst; the first hydrocracking catalyst includes a molecular sieve capable of selectively cracking n-alkane.

Petroleum hydrocarbons are composed of complex ingredients, mainly comprise paraffins, naphthenes, and aromatic hydrocarbons, while the high quality ethylene feedstock is a micro-molecular n-alkane, and the reforming raw materials are monocyclic naphthenes and aromatic hydrocarbons. The inventors of the present invention have discovered in research that by initially subjecting a hydrocarbon oil raw material to a first hydrocracking reaction, controlling the mass content of a C₇⁺ n-alkane in the first hydrocracking reaction product to be less than 5%, followed by a second hydrocracking reaction, which mainly relates to the ring-opening cracking of polycyclic cyclic hydrocarbons, and the selective hydrocracking of long side chains on isomeric hydrocarbons or cyclic hydrocarbons, the process is performed to obtain efficient enrichment of micro-molecular n-alkanes in a low-carbon olefin raw material while retaining as much monocyclic cyclic hydrocarbons in heavy naphtha as possible, in order to achieve efficient enrichment of the high-quality reforming raw material, thereby greatly improving the yield of chemical raw materials (including a low-carbon olefin raw material and a reforming raw material) and the quality of said low-carbon olefin raw material and reforming raw material.

### BRIEF DESCRIPTION OF THE DRAWINGS

FIG. 1 is a schematic diagram of a hydrogenation method and a hydrogenation system for a hydrocarbon oil according to one specific embodiment of the invention;
FIG. 2 is a schematic diagram of a hydrogenation method and a hydrogenation system for a hydrocarbon oil according to another specific embodiment of the invention.

### DESCRIPTION OF REFERENCE SIGNS

1: Hydrocarbon oil raw material
2: Hydrogen
3: First hydrocracking reaction zone
4: First hydrocracking reaction product
5: Second hydrocracking reaction zone
6: Second hydrocracking reaction product
7: Gas-liquid separation unit
8: Gas phase material flow hydrogen-rich gas
9: Liquid phase material flow
10: Fractionation unit
11: Gas fraction
12: Light naphtha
13: Heavy naphtha
14: Tail oil

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The expressions "first" and "second" used herein merely serve to distinguish the materials or operations used in different steps or stages, instead of imposing limitations to the particular materials or operations.

The first aspect of the present invention provides a hydrogenation method for a hydrocarbon oil, the method comprises the following steps:
(1) Subjecting a hydrocarbon oil raw material to a first hydrocracking reaction in the presence of hydrogen, so as to obtain a first hydrocracking reaction product, wherein the mass content of a C₇⁺ n-alkane in the first hydrocracking reaction product is 5% or below;
(2) Subjecting the first hydrocracking reaction product to a second hydrocracking reaction in the presence of hydrogen, so as to obtain a second hydrocracking reaction product;
(3) Separating and fractionating the second hydrocracking reaction product.

According to a preferred embodiment of the invention, the mass content of a C₇⁺ n-alkane in the first hydrocracking reaction product is within the range of 0.1-5%, for example, the mass content may be 0.1%, 0.3%, 0.5%, 0.7%, 1%, 1.5%, 2%, 2.5%, 3%, 3.5%, 4%, 4.5%, 5%, or a random value within the range consisting of any two numerical values, more preferably within the range of 0.5-4.5%, and most preferably within the range of 1-3%.

According to a preferred embodiment of the present invention, the mass ratio of the C₆-C₈ monocyclic cyclic hydrocarbons in the second hydrocracking reaction product to the total cyclic hydrocarbons in the hydrocarbon oil raw material is within the range of 0.4-0.7, more preferably within the range of 0.45-0.6.

The hydrogenation method for a hydrocarbon oil provided by the invention comprises step (1), subjecting a hydrocarbon oil raw material to a first hydrocracking reaction in the presence of hydrogen gas, selectively cracking n-alkanes in a hydrocarbon oil raw material, to obtain a first hydrocracking reaction product having the mass content of C₇⁺ n-alkanes being 5% or below; step (2) subjecting the first hydrocracking reaction product to a second hydrocracking reaction in the presence of hydrogen, to obtain a second hydrocracking reaction product containing monocyclic cyclic hydrocarbons. Wherein the first hydrocracking reaction mainly serves to crack the n-alkanes, iso-paraffins including a long straight chain, and cyclic hydrocarbons in the raw material to produce C₂-C₆ light hydrocarbons, which are mainly enriched in the gas product and light naphtha, and maximally increase the content of normal hydrocarbons in the C₂-C₆ light hydrocarbons. The gas product and light naphtha may be used as a high-quality raw material for the production of low-carbon olefin.

The invention is not particularly limited with respect to the kind of said hydrocarbon oil raw material, preferably, the hydrocarbon oil raw material is at least one selected from the group consisting of naphtha, diesel, kerosene, and wax oil, more preferably, at least one of naphtha (preferably heavy naphtha), diesel, and kerosene.

According to the present invention, in particular, when the hydrocarbon oil raw material is a heavy naphtha feedstock, ethane, propane, butane, and light naphtha are obtained as the feedstock for producing a low carbon olefin, and the obtained heavy naphtha can be used as a reforming raw material. When the hydrocarbon oil raw material is a heavy naphtha feedstock, the long straight chain hydrocarbons in heavy naphtha can be selectively cracked, the broken side chain cyclic hydrocarbons are retained, the cyclic hydrocarbons in the heavy naphtha after hydrocracking are highly enriched, and the cyclic hydrocarbons are mainly composed of C₆-C₈ monocyclic cyclic hydrocarbons.

According to the invention, when the hydrocarbon oil raw material is diesel or kerosene, the obtained feedstock for producing a low-carbon olefin is ethane, propane, butane, and light naphtha, and the obtained heavy naphtha can be used as a reforming raw material.

Preferably, the mass content of n-alkane in the hydrocarbon oil raw material is within the range of 5%-60%, preferably within the range of 10%-40%, for example 10%, 15%, 20%, 25%, 30%, 35%, 40%, and a random value within the range consisting of any two numerical values.

Preferably, the mass content of cyclic hydrocarbons in the hydrocarbon oil raw material is within the range of 20%-90%, preferably within the range of 30%-70%, for example 30%, 35%, 40%, 45%, 50%, 55%, 60%, 65%, 70%, and a random value within the range consisting of any two numerical values.

Preferably, the mass content of bicyclic and above cyclic hydrocarbons in the hydrocarbon oil raw material is within the range of 0%-80%, more preferably within the range of 0%-60%.

The mass contents of the n-alkane, cycloalkane, or bicyclic and above cyclic hydrocarbons in different types of hydrocarbon oil raw materials (naphtha, diesel, kerosene, or wax oil) are not completely identical, for example, naphtha does not contain bicyclic or above cyclic hydrocarbons. Based on the above disclosure, those skilled in the art can make an adaptive choice.

According to the present invention, the hydrocarbon oil raw material may include impurities such as sulfur and nitrogen. Before performing the first hydrocracking reaction, the hydrocarbon oil raw material may be hydrofined to remove impurities such as sulfur and nitrogen according to the practical requirements. The conditions for hydrofining and hydrofining catalysts in use are not particularly limited, both may be the conventional choices in the art. For example, the hydrofining catalyst includes a carrier and a hydrogenation active metal, wherein the carrier is an inorganic refractory oxide, typically one or more selected from the group consisting of alumina, amorphous silica alumina, silica, and titania; the hydrogenation active metal includes a group VIB metal component and/or a group VIII metal component. In the hydrofining catalyst, the group VIB metal component is preferably selected from tungsten and/or molybdenum, its content in the catalyst calculated in terms of the mass of oxide is within a range of 5%-30%, preferably within a range of 10%-20%, the group VIII metal component is preferably selected from nickel and/or cobalt, its content in the catalyst calculated in terms of the mass of oxide is within a range of 1%-6%, preferably within a range of 1.5%-5%.

The hydrofining catalyst can be voluntarily prepared with any method or a commercially available catalyst, the invention is not particularly limited thereto.

Preferably, the nitrogen content of the reactant stream for performing the first hydrocracking reaction is 50 mg/kg or below, further preferably 20 mg/kg or below.

According to the invention, the first hydrocracking reaction and the second hydrocracking reaction may be conducted in the first hydrocracking reaction zone and the second hydrocracking reaction zone respectively. The first hydrocracking reaction zone may be loaded with a first hydrocracking catalyst, and the second hydrocracking reaction zone may be loaded with a second hydrocracking catalyst, wherein the first hydrocracking catalyst may be one or more kinds of catalysts, and the second hydrocracking catalyst may be one or more kinds of catalysts. The first hydrocracking reaction zone and the second hydrocracking reaction zone may be arranged in the upper and lower beds of the same reactor, or arranged in two reactors connected in series.

The hydrogen in steps (1) and (2) of the invention may be any hydrogen-containing gas capable of providing hydrogen gas, such as fresh hydrogen gas, recycled hydrogen gas, or a hydrogen-rich gas. Those skilled in the art may understand the hydrogen-containing gas of the invention after clearly comprehending the technical scheme of the invention.

The present invention has a wide range of choices for the first hydrocracking catalyst class, as long as it is capable of selectively cracking n-alkanes. Preferably, the types of the first hydrocracking catalyst and the conditions of the first hydrocracking reaction are arranged such that the mass content of a C₇⁺ n-alkane in the first hydrocracking reaction product is 5% or below. Preferably, the first hydrocracking catalyst comprises an active metal component and a carrier; the carrier comprises a molecular sieve capable of selectively cracking n-alkane, the molecular sieve is preferably at least one selected from the group consisting of a ZSM-5 molecular sieve, a ZSM-11 molecular sieve, a ZSM-12 molecular sieve, a ZSM-22 molecular sieve, a ZSM-23 molecular sieve, a ZSM-35 molecular sieve, and a ZSM-38 molecular sieve, further preferably a ZSM-5 molecular sieve. The use of such a preferred embodiment is advantageous for the cracking of n-alkanes with a high selectivity.

According to the invention, preferably, the active metal component comprises at least one of a group VIB metal and a group VIII metal; for example, the active metal component includes at least one of a group VIB metal and a group VIII metal. Further preferably, the group VIB metal is molybdenum and/or tungsten, and the group VIII metal is cobalt and/or nickel.

According to the invention, preferably, the carrier of the first hydrocracking catalyst may further comprise a binder, the kind of binder may be conventionally selected in the art, including but not limited to alumina and/or silica.

According to the present invention, preferably, the content of said group VIB metal calculated in terms of oxide is within the range of 5 wt.% - 15 wt.%, the content of said group VIII metal calculated in terms of oxide is within the range of 2 wt.% - 5 wt.%, and the content of said carrier is within the range of 80 wt.% - 93 wt.%, based on the weight of the first hydrocracking catalyst. Preferably, the content of said molecular sieve is within the range of 40 wt.% - 92 wt.%, and the content of said binder is within the range of 8 wt.% - 60 wt.%, based on the weight of said carrier.

According to the invention, the first hydrocracking catalyst in step (1) preferably has a specific surface area of 200-400 m²/g and a pore volume of 0.25-0.45 mL/g.

The first hydrocracking catalyst may be voluntarily prepared with any method or a commercially available catalyst, the present invention is not particularly limited thereto.

According to the invention, the first hydrocracking catalyst of step (1) may be prepared according to conventional methods in the art. The preparation method includes the preparation of a carrier and loading an active metal ingredient, wherein the preparation process of a carrier comprises the following steps: mechanically mixing a shape selective cracking molecular sieve and a binder to form a mixture, molding the mixture, then drying and roasting to prepare a catalyst carrier. The drying and roasting of the carrier may be performed using conventional conditions. The drying conditions are preferably drying at the temperature of 100-150°C for 1-12 hours. The roasting conditions are preferably roasting at the temperature of 450-550°C for 2.5-6 hours.

According to the invention, in the preparation method of the first hydrocracking catalyst in step (1), the method of loading the active metal component may be a conventional method, such as a mixing and kneading process, an impregnation process, preferably an impregnation process. The impregnation process may be a saturation impregnation method, an excess impregnation method, or a complexation impregnation method, that is, a solution containing the desired active component is used for impregnating the catalyst carrier, then drying and roasting the catalyst carrier to obtain a first hydrocracking catalyst. The drying conditions comprise drying at the temperature of 100-150°C for 1-12 hours. The roasting conditions comprise roasting at the temperature of 450-550°C for 2.5-6 hours.

According to the invention, the reaction conditions of the first hydrocracking reaction preferably comprise: a reaction pressure of 1-25MPa, more preferably 2-18MPa; an average reaction temperature of 250-450°C, more preferably 300-400°C; a liquid hourly volume space velocity of 0.1-15 h⁻¹, more preferably 1-5 h⁻¹; and a hydrogen-oil volume ratio within the range of (100-2,500): 1, more preferably within the range of (400-2,000): 1. In particular, the reaction pressure may be 2MPa, 4MPa, 6MPa, 8MPa, 10MPa, 12MPa, 14MPa, 16MPa, 18MPa, and a random value within the range consisting of any two numerical values. In particular, the average reaction temperature may be 300°C, 320°C, 350°C, 380°C, 400°C, and a random value within the range consisting of any two numerical values. In particular, the liquid hourly volume space velocity may be 1 h⁻¹, 2 h⁻¹, 3 h⁻¹, 4 h⁻¹, 5 h⁻¹, and a random value within the range consisting of any two numerical values. In particular, the hydrogen-oil volume ratio may be 400, 600, 800, 1,000, 1,200, 1,400, 1,600, 1,800, 2,000, and a random value within the range consisting of any two numerical values.

According to a specific embodiment of the invention, the first hydrocracking reaction may be performed in a first hydrocracking reaction zone provided with a first hydrocracking reaction bed.

In the invention, the first hydrocracking reaction product may be directly subjected to a second hydrocracking reaction, or separating and fractionating the first hydrocracking reaction product, and subjecting the obtained tail oil fraction to the second hydrocracking reaction in step (2). Preferably, the method provided by the invention further comprises: separating and fractionating the first hydrocracking reaction product, and subjecting the obtained tail oil fraction to the second hydrocracking reaction in step (2).

Preferably, the first hydrocracking reaction product and the second hydrocracking reaction product share the same set of separation and fractionation systems.

According to a preferred embodiment of the invention, the second hydrocracking reaction is performed in the presence of a second hydrocracking catalyst. Preferably, the second hydrocracking catalyst has the functions of ring-opening cracking of polycyclic cyclic hydrocarbons, selective cracking of side chains of isomeric hydrocarbons or cyclic hydrocarbons, and retaining the monocyclic cyclic hydrocarbons. Preferably, the second hydrocracking catalyst comprising a cracking component, a hydrogenation component, and a binder. The second hydrocracking catalyst may be a commercially available product, or prepared in accordance with the prior art.

Preferably, the cracking component comprises an acidic molecular sieve, preferably a Beta molecular sieve and/or a Y molecular sieve, further preferably a Beta molecular sieve and optionally a Y molecular sieve. Those skilled in the art may perform the second hydrocracking reaction by matching different molecular sieves based on a hydrocarbon oil raw material. For example, the scheme of grading a Beta sieve with a Y molecular sieve may be adopted when the content of polycyclic aromatic hydrocarbons in the material flow subjected to the second hydrocracking reaction is higher than 3wt%, and the invention purpose of the present invention can also be fulfilled by merely using a Beta molecular sieve as the cracking component when the content of polycyclic aromatic hydrocarbons in the material flow subjected to the second hydrocracking reaction is low.

The scheme of grading a Beta sieve with a Y molecular sieve may be that the second hydrocracking catalyst comprises both the Beta molecular sieve and the Y molecular sieve, or two second hydrocracking catalysts containing the Beta molecular sieve and the Y molecular sieve respectively are arranged in the upper and lower layers in a bed; preferably, the second hydrocracking catalyst containing a Y molecular sieve and the second hydrocracking catalyst containing a Beta molecular sieve are arranged sequentially along the direction of material flow. The invention has wide range of choices for the dosage of Beta molecular sieve and Y molecular sieve, those skilled in the art can adaptively select the dosage based on the composition of the material flow subjected to the second hydrocracking reaction, preferably the dosage can meet the requirements that the mass ratio of the C₆-C₈ monocyclic cyclic hydrocarbons in the second hydrocracking reaction product to the total cyclic hydrocarbons in the hydrocarbon oil raw material is within the range of 0.4-0.7, preferably within the range of 0.45-0.6. Preferably, the volume ratio of the second hydrocracking catalyst containing a Y molecular sieve to the second hydrocracking catalyst containing a Beta molecular sieve may be 1: (0.1-10), more preferably 1: (0.5-5), for example, the ratio may be 1:0.5, 1:1, 1:2, 1:3, 1:4, 1:5, and a random value within the range consisting of any two numerical values.

The hydrogenation component of the second hydrocracking catalyst is preferably at least one of a metal, a metal oxide, a metal sulfide of the active metal component. Preferably, the active metal component comprises a group VIB metal and/or a group VIII metal; and more preferably, the active metal component comprises at least one of iron, chromium, molybdenum, tungsten, cobalt, and nickel.

The binder of the second hydrocracking catalyst may be the conventional choice in the art, preferably alumina and/or silica.

According to a preferred embodiment of the invention, the content of said hydrogenation component in terms of oxide in the second hydrocracking catalyst is within the range of 5 wt.% - 40 wt.%, preferably within the range of 10 wt.% - 20 wt.%, the content of said cracking component is within the range of 20 wt.% - 80 wt.%, preferably within the range of 30 wt.% - 70 wt.%; and the content of said binder is within the range of 5 wt.% - 75 wt.%, preferably within the range of 10 wt.% - 50 wt.%, based on the weight of said second hydrocracking catalyst.

The second hydrocracking catalyst may be voluntarily prepared with any method or a commercially available catalyst, the present invention is not particularly limited thereto.

According to the invention, the preparation process of the second hydrocracking catalyst in step (2) may be prepared according to conventional methods in the art. The preparation method includes the preparation of a carrier and loading an active metal ingredient, wherein the preparation process of a carrier comprises the following steps: mechanically mixing a cracking component and a binder to form a mixture, molding the mixture, then drying and roasting to prepare a catalyst carrier. The drying and roasting of the carrier may be performed by using the conventional conditions. The drying conditions preferably comprise drying at the temperature of 100-150°C for 1-12 hours. The roasting conditions preferably comprise roasting at the temperature of 450-550°C for 2.5-6 hours.

According to the invention, in the preparation method of the second hydrocracking catalyst in step (2), the method of loading the active metal component may be a conventional method, such as a mixing and kneading process, an impregnation process, preferably an impregnation process. The impregnation process may be a saturation impregnation method, an excess impregnation method, or a complexation impregnation method, that is, a solution containing the desired hydrogenation component is used for impregnating the catalyst carrier, then drying and roasting the catalyst carrier to obtain a second hydrocracking catalyst. The drying conditions comprise drying at the temperature of 100-150°C for 1-12 hours. The roasting conditions comprise roasting at the temperature of 450-550°C for 2.5-6 hours.

According to the invention, the reaction conditions of the second hydrocracking reaction preferably comprise: a reaction pressure of 1-25MPa, more preferably 2-18MPa; an average reaction temperature of 250-450°C, more preferably 300-400°C; a liquid hourly volume space velocity of 0.1-15 h⁻¹, more preferably 1-5 h⁻¹; and a hydrogen-oil volume ratio within the range of (100-2,500): 1, more preferably (400-2,000): 1. In particular, the reaction pressure may be 2MPa, 4MPa, 6MPa, 8MPa, 10MPa, 12MPa, 14MPa, 16MPa, 18MPa, and a random value within the range consisting of any two numerical values. In particular, the average reaction temperature may be 300°C, 320°C, 350°C, 380°C, 400°C, and a random value within the range consisting of any two numerical values. In particular, the liquid hourly volume space velocity may be 1 h⁻¹, 2 h⁻¹, 3 h⁻¹, 4 h⁻¹, 5 h⁻¹, and a random value within the range consisting of any two numerical values. In particular, the hydrogen-oil volume ratio may be 400, 600, 800, 1,000, 1,200, 1,400, 1,600, 1,800, 2,000, and a random value within the range consisting of any two numerical values.

According to the invention, the reaction pressures of the first hydrocracking reaction and the second hydrocracking reaction may be the same.

According to the present invention, those skilled in the art may subject the second hydrocracking reaction product to separation and fractionation according to the requirements of producing a product. The present invention is not particularly limited with respect to the specific operations of separation and fractionation. In particular, the separation is preferably gas-liquid separation to obtain a gas phase material flow and a liquid phase material flow. The conditions for the gas-liquid separation are not particularly limited in the invention.

According to a preferred embodiment of the invention, the separation and fractionation comprise: subjecting the second hydrocracking reaction product to a gas-liquid separation to obtain a gas phase material flow and a liquid phase material flow, and subjecting the liquid phase stream to a fractionation to obtain a gas fraction, light naphtha, heavy naphtha, and tail oil. The gas phase material flow is hydrogen-rich gas, wherein the hydrogen gas may be recycled for providing the hydrogen gas in step (1) and/or step (2).

According to the present invention, the fractionation may be performed in a fractionation column.

The present invention has no particular limitation on the fractionating conditions, as long as the above-mentioned product is obtained.

For example, different hydrocracking products can be obtained through fractionation, the light naphtha fraction may have an initial distillation point of 20°C-40°C, the cutting temperature between light naphtha and heavy naphtha may be within the range of 50°C to 100°C, and the cutting temperature between heavy naphtha and tail oil may be within the range of 160°C to 200°C, i.e., the initial distillation point of tail oil.

Preferably, the method further comprises recycling the tail oil to step (1) for subjecting to the first hydrocracking reaction and/or recycling the tail oil to step (2) for subjecting to the second hydrocracking reaction, preferably recycling the tail oil to step (2) for subjecting to the second hydrocracking reaction.

The gas fraction may include at least one of ethane, propane, and butane.

According to a preferred embodiment of the invention, the n-alkane content is between 50% and 70%, preferably between 54% and 70%, based on the total mass of the gas fraction and the light naphtha. In the preferred embodiment, the gas fraction and the light naphtha are high-quality raw material for producing low-carbon olefins. Preferably, the method further comprises using at least part of the gas fraction and/or the light naphtha as the raw material for producing low-carbon olefins.

Preferably, the method further comprises subjecting at least part of the gas fraction and/or the light naphtha to the steam cracking reaction for producing ethylene, ethane dehydrogenation reaction, or propane dehydrogenation reaction.

Generally, the operating conditions of the steam cracking reaction for producing ethylene comprise: a reaction temperature within the range of 750°C to 900°C, a reaction pressure within the range of 0.1-0.5MPa, and a water-oil mass ratio within the range of 0.2-0.6.

According to the present invention, the yield of the three olefins (ethylene, propylene, and butadiene) from the steam cracking reaction for producing ethylene is preferably above 50%, further preferably between 50% and 60%.

The method provided by the invention further comprises recovering hydrogen gas from the steam cracking reaction for producing ethylene and then recycling the hydrogen gas to the first hydrocracking reaction in step (1). The step (1) in the present invention selectively converts paraffin in the hydrocarbon oil raw material into micro-molecular alkane, such a process will consume a certain amount of hydrogen gas, but light hydrocarbon as a raw material of ethylene unit has a high yield of hydrogen gas, the lower is the carbon number, the higher is the hydrogen gas yield. Therefore, a large portion of hydrogen gas consumed in the hydrogenation process can be recovered through the ethylene unit, and light hydrocarbon as a raw material of ethylene unit can greatly improve the yield of ethylene, propylene, and butadiene, and extend the glue cleaning cycle of ethylene unit, thereby significantly increasing the economic efficiency of the unit.

The gas fraction and/or the light naphtha may be arranged, in addition to being used as a feedstock for the production of a low-carbon olefin, a portion of ingredient can be used as the raw material of other unit as required, for instance, propane contained therein may be directly used as a feedstock for a propane dehydrogenation plant for propylene production. Generally, the operating conditions for the propane dehydrogenation plant comprise: a reaction temperature within the range of 600°C to 680°C, preferably within the range of 620°C to 650°C; a reaction pressure within the range of 0.1MPa to 0.5MPa, preferably within the range of 0.2MPa to 0.3MPa; and a hourly volume space velocity within the range of 0.2h⁻¹-8 h⁻¹.

Preferably, the method further comprises using at least part of the heavy naphtha as a feedstock for the catalytic reformer.

Preferably, the method further comprises subjecting at least part of the heavy naphtha to a catalytic reforming.

The invention is not specifically limited to the particular operation and form of said catalytic reforming, which may be selected and performed according to the conventional practice in the art, the catalytic reforming is preferably semi-regenerative reforming, continuous reforming, or cyclic regenerative reforming.

Preferably, the conditions of the catalytic reforming reaction comprise: a reaction temperature of 480-530°C, a reaction pressure of 0.35-1.5MPa, a hydrogen-hydrocarbon molar ratio of 2-8, and a volume hourly space velocity of 1-6 h⁻¹.

In the prior art, the catalytic reformer generally comprises three reaction zones, namely a dehydrogenation reaction zone of six-membered cycloalkanes, an isomerization dehydrogenation reaction zone of five-membered cycloalkanes, and an alkane cyclization and dehydrogenation reaction zone. The heavy naphtha obtained with the hydrogenation method of hydrocarbon oil according to the present invention has a high content of monocyclic cyclic hydrocarbons, when the heavy naphtha is used as a feedstock of the catalytic reformer, it allows to optimize the catalytic reformer by eliminating the alkane cyclization and dehydrogenation reaction zone, thereby greatly decreasing the investment and energy consumption of the catalytic reformer; in addition, given that the hydrocracking reaction follows the mechanism of the reaction of carbonium ions, the cyclic hydrocarbons of C₉ or above may be selectively subjected to the side chain scission reaction, such that the product has a high enrichment of C₆-C₈ cyclic hydrocarbons, the BTX yield can be greatly improved after performing the catalytic reforming and aromatic hydrocarbon extraction.

Preferably, the catalytic reformer comprises a dehydrogenation reaction zone of six-membered cycloalkanes and an isomerization dehydrogenation reaction zone of five-membered cycloalkanes, excluding an alkane cyclization and dehydrogenation reaction zone. Further, BTX fractions can be obtained by subjecting the heavy naphtha to the catalytic reforming reaction and separation in an aromatic hydrocarbon extraction unit. The aromatic extraction can be carried out using conventional techniques. The aromatic hydrocarbon extraction can be carried out by using the prior art, the conventional aromatic hydrocarbon extraction methods comprise: a liquid-liquid extraction method or an extraction distillation method. The invention preferably uses a liquid-liquid extraction method, the extraction solvent may be one or more of diethylene glycol, triethylene glycol, tetraethylene glycol, sulfolane, N-methylpyrrolidone, dimethylsulfoxide. The extraction conditions preferably comprise: an extraction temperature within the range of 20°C to 200°C, preferably within the range of 50°C to 150°C; a mass ratio of solvent: heavy naphtha within the range of (1-8): 1, preferably within the range of (3-5): 1; and a pressure within the range of 0-2MPa, preferably within the range of 0.1-0.5MPa.

According to a preferred embodiment of the invention, the method further comprises: subjecting the second hydrocracking reaction product to a supplementary hydrofining, and/or, subjecting the heavy naphtha to a supplementary hydrofining before using the heavy naphtha as a feedstock of the catalytic reformer. The use of such a preferred embodiment is more advantageous to control the bromine index of the feedstock of the catalytic reformer.

In particular, the mode of subjecting the second hydrocracking reaction product to a supplementary hydrofining may be filling hydrofining catalysts downstream the second hydrocracking catalysts, or introducing the second hydrocracking reaction product into a separate hydrofining reaction zone.

The invention is not specifically limited to the particular operating conditions for the supplementary hydrofining as long as the bromine index requirements of the catalytic reformer for the feedstock can be met.

In the hydrogenation method of hydrocarbon oil according to the invention, a hydrocarbon oil raw material and hydrogen gas are subjected to a first hydrocracking reaction, which mainly selectively crack the n-alkane, isomeric alkane containing long straight chain, and the long straight chain of the cycloalkanes in the raw material to generate micro-molecular normal hydrocarbons, such that the mass content of a C₇⁺ n-alkane in the first hydrocracking reaction product is 5% or below; the first hydrocracking reaction product or the tail oil obtained after fractionation of the first hydrocracking reaction product enter a second hydrocracking reaction zone, which mainly comprises ring-opening and cracking of the polycyclic cyclic hydrocarbons, and retaining monocyclic cyclic hydrocarbons, and further subjecting side chains in hydrocarbons to the chain scission to generate the micro-molecular hydrocarbons, so that a large amount of the paraffins in the hydrocarbon oil raw material can be converted to gas and light naphtha components enriched in a low-carbon olefin raw material, the monocyclic cyclic hydrocarbons are retained in a heavy naphtha fraction, i.e., enriched in a reforming raw material, the efficient separation of paraffins and cyclic hydrocarbons can be achieved by a simple operation of fractionation, it can increase production of high-quality ethylene cracking feedstock, and improve quality of the heavy naphtha as a catalytic reforming feedstock.

The second aspect of the invention provides a hydrogenation system for a hydrocarbon oil, the system comprises a first hydrocracking catalyst bed, a second hydrocracking catalyst bed, a gas-liquid separation unit, and a fractionation unit arranged in sequence along the direction of material flow;
Wherein the first hydrocracking catalyst bed is loaded with a first hydrocracking catalyst, and the second hydrocracking catalyst bed is loaded with a second hydrocracking catalyst; the first hydrocracking catalyst includes a molecular sieve capable of selectively cracking n-alkane.

The first hydrocracking catalyst and the second hydrocracking catalyst may be selected in the same ranges as the hydrogenation method of the first aspect mentioned above, the content is not repeatedly described in the invention.

The arrangement modes of the first hydrocracking catalyst bed and the second hydrocracking catalyst bed may be the same as those described in the hydrogenation method according to the first aspect mentioned above, the content is not repeatedly described in the invention.

According to a specific embodiment of the invention, the gas-liquid separation unit is provided with a gas phase material flow outlet and a liquid phase material flow outlet, the liquid phase material flow outlet of the gas-liquid separation unit is in communication with an inlet of the fractionation unit.

The outlets of the fractionation unit may be arranged according to the product requirements, preferably the fractionation unit is provided with a gas fraction outlet, a light naphtha outlet, a heavy naphtha outlet, and a tail oil outlet.

Preferably, the tail oil outlet is in communication with an inlet of the first hydrocracking catalyst bed and/or an inlet of the second hydrocracking catalyst bed, such that the tail oil obtained from the fractionation unit is subjected to a first hydrocracking reaction in the first hydrocracking catalyst bed and/or a second hydrocracking reaction in the second hydrocracking catalyst bed. More preferably, the tail oil outlet of the fractionation unit is in communication with an inlet of the second hydrocracking catalyst bed. In this manner, the tail oil may be returned to the second hydrocracking catalyst bed for subjecting to the further treatment.

In particular, the hydrocarbon oil raw material contacts with a first hydrocracking catalyst in the first hydrocracking catalyst bed to perform the first hydrocracking reaction to obtain the first hydrocracking reaction product, the first hydrocracking reaction product contacts with the second hydrocracking catalyst in the second hydrocracking catalyst bed to perform the second hydrocracking reaction to obtain the second hydrocracking reaction product, which is separated in the gas-liquid separation unit to obtain a gas phase stream and a liquid phase stream, wherein the liquid phase stream is fed into a fractionation unit to subject to fractionating, in particular to obtain a gas fraction, light naphtha, heavy naphtha, and tail oil.

According to a preferred embodiment of the invention, according to a preferred embodiment of the invention, an outlet of the first hydrocracking catalyst bed is in communication with an inlet of the gas-liquid separation unit. With such a preferred embodiment, it is possible to separate and fractionate the first hydrocracking reaction product to obtain tail oil, which is fed into a second hydrocracking catalyst bed for performing a second hydrocracking reaction.

According to a preferred embodiment of the invention, the first hydrocracking catalyst bed is used for subjecting a hydrocarbon oil raw material to a first hydrocracking reaction to obtain a first hydrocracking reaction product, the mass content of a C₇⁺ n-alkane is 5% or below, preferably within the range of 0.1-5%, such as 0.1%, 0.3%, 0.5%, 0.7%, 1%, 1.5%, 2%, 2.5%, 3%, 3.5%, 4%, 4.5%, 5%, or a random value within the range consisting of any two numerical values.

Preferably, the molecular sieve capable of selectively cracking n-alkane is at least one selected from the group consisting of a ZSM-5 molecular sieve, a ZSM-11 molecular sieve, a ZSM-12 molecular sieve, a ZSM-22 molecular sieve, a ZSM-23 molecular sieve, a ZSM-35 molecular sieve, and a ZSM-38 molecular sieve, further preferably a ZSM-5 molecular sieve.

According to a preferred embodiment of the present invention, the second hydrocracking catalyst bed is used for subjecting the second hydrocracking reaction product to a second hydrocracking reaction to obtain a second hydrocracking reaction product, and the mass ratio of the C₆-C₈ monocyclic cyclic hydrocarbons in the second hydrocracking reaction product to the total cyclic hydrocarbons in the hydrocarbon oil raw material is within the range of 0.4-0.7, more preferably within the range of 0.45-0.6.

Preferably, the second hydrocracking catalyst comprises a Beta molecular sieve and/or a Y molecular sieve, further preferably a Beta molecular sieve and optionally a Y molecular sieve.

According to a preferred embodiment of the invention, the system further comprises a low carbon hydrocarbon production device and/or a catalytic reformer, an inlet of the low carbon hydrocarbon production device is in communication with the gas fraction outlet and/or the light naphtha outlet; the catalytic reformer is in communication with the heavy naphtha outlet. The gas fraction and light naphtha obtained using the system provided by the invention may be used as a high-quality low carbon hydrocarbon production feedstock, and the heavy naphtha is a high-quality catalytic reforming raw material.

Preferably, the low carbon hydrocarbon production device comprises at least one of a steam cracking device for producing ethylene, an ethane dehydrogenation device, and a propane dehydrogenation device.

Preferably, the catalytic reformer comprises a dehydrogenation reaction zone of six-membered cycloalkanes and an isomerization dehydrogenation reaction zone of five-membered cycloalkanes, excluding an alkane cyclization and dehydrogenation reaction zone.

The solutions and effects of the invention are further illustrated with reference to the examples below.

Unless otherwise specified in the present invention, % refers to a mass fraction.

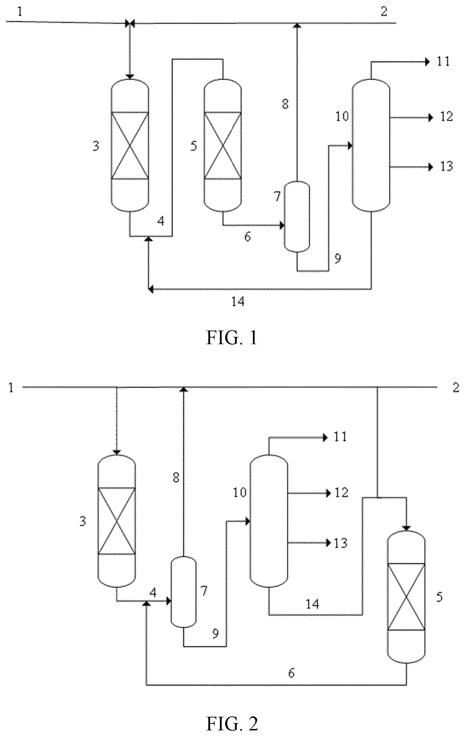

According to one specific embodiment of the hydrogenation method and hydrogenation system of a hydrocarbon oil in the present invention, as shown in FIG. 1, a hydrocarbon oil raw material 1 was mixed with hydrogen 2 and entered into a first hydrocracking reaction zone 3 for performing a first hydrocracking reaction, the first hydrocracking reaction product 4 entered into a second hydrocracking reaction zone 5 for carrying out a second hydrocracking reaction, the second hydrocracking reaction product 6 entered into a gas-liquid separation unit 7, the separated gas phase material flow hydrogen-rich gas 8 was recycled, the liquid phase material flow 9 entered into a fractionation unit 10, the gas fraction 11, light naphtha 12, heavy naphtha 13, and tail oil 14 were fractionated and obtained, the tail gas 14 was circulated to the second hydrocracking reaction zone 5.

According to another specific embodiment of the hydrogenation method and hydrogenation system of the hydrocarbon oil in the present invention, as shown in FIG. 2, a hydrocarbon oil raw material 1 was mixed with hydrogen 2 and entered into a first hydrocracking reaction zone 3 for performing a first hydrocracking reaction, the first hydrocracking reaction product 4 entered into a gas-liquid separation unit 7, the separated gas phase material flow hydrogen-rich gas 8 was recycled, the liquid phase material flow 9 entered into a fractionation unit 10, the gas fraction 11, light naphtha 12, heavy naphtha 13, and tail oil 14 were fractionated and obtained, the tail gas 14 was mixed with hydrogen 2 and entered into a second hydrocracking reaction zone 5 for performing a second hydrocracking reaction, the second hydrocracking reaction product 6 was fed into the gas-liquid separation unit 7.

In the invention, the first hydrocracking catalysts in Examples were represented by the Cat-A plus a number, such as Cat-A1, Cat-A2, and Cat-A3. The first hydrocracking catalysts were prepared by the conventional saturation impregnation methods of active metals, the physicochemical properties of the prepared catalysts were shown in Table 1.

In the following examples and comparative examples, the light naphtha obtained from fractionating had a distillation range of 30°C to 60°C, and the heavy naphtha had a distillation range 60°C to 175°C.

In the present invention, the second hydrocracking catalyst was represented by a Cat-B plus a number, such as Cat-B1, Cat-B2. The properties of the catalysts were shown in Table 2. The second hydrocracking catalysts in examples were prepared by the conventional saturation impregnation methods of active metals, wherein the Beta molecular sieve used in the catalyst Cat-B1 exhibited the following properties: a SiO₂/Al₂O₃ molar ratio of 30, a specific surface area of 350 m²/g, a pore volume of 0.32 cm³/g; the Y molecular sieve used in the catalyst Cat-B2 exhibited the following properties: a SiO₂/Al₂O₃ molar ratio of 30, a specific surface area of 400 m²/g, and a pore volume of 0.30 cm³/g; the properties of the prepared catalysts were shown in Table 2.

In various examples of the invention, the ethane, propane, butane, and light naphtha obtained from hydrocracking entered a steam cracking device for producing ethylene, and obtained the main target products ethylene, propylene, and butadiene, the three olefins yield was the sum of the production by mass of ethylene, propylene, and butadiene and the feed quantity by mass of ethane, propane, butane, and light naphtha. The operation conditions of the steam cracking device for producing ethylene comprised: a reaction temperature of 880°C, a reaction pressure of 0.2MPa, and a water-oil mass ratio of 0.4.

In examples of the present invention, the heavy naphtha obtained from hydrocracking was subjected to the supplementary hydrofining, the hydrofining catalyst was the catalyst FH-40C developed by the SINOPEC Fushun Research Institute of Petroleum and Petrochemicals (FRIPP), the operation conditions of the supplementary hydrofining comprised: a reaction temperature of 300°C, a reaction pressure of 4.0MPa, a hydrogen-oil volume ratio of 300, a volume hourly space velocity of 4 h⁻¹; the refined naphtha entered a catalytic reformer, the operation conditions of the catalytic reforming comprised: a reaction temperature of 500°C, a reaction pressure of 0.8MPa, a hydrogen-hydrocarbon molar ratio of 5, and a volume hourly space velocity of 4 h⁻¹, and the catalyst was Pt/Al₂O₃, where Pt accounted for 0.2% by mass of the catalyst; the reformed oil entered an aromatic hydrocarbon extraction device, wherein the extraction solvent was sulfolane, the operation conditions of the aromatic hydrocarbon extraction comprised: an extraction temperature of 80°C, a solvent: heavy naphtha mass ratio of 4:1, and pressure of 0.3MPa. The BTX yield derived from the aromatic hydrocarbon extraction was the percentage of the C6-C8 aromatic hydrocarbons relative to the feed quantity of the heavy naphtha for catalytic reforming.

In the present invention, the key properties of hydrocarbon oil raw materials in examples were shown in Table 3.

### Example 1

The example provided a hydrogenation method for kerosene using the process as shown in FIG. 1, the method comprised:
(1) Kerosene was mixed with hydrogen gas and sequentially entered into a first hydrocracking reaction zone and a second hydrocracking reaction zone; the first hydrocracking reaction zone was loaded with a first hydrocracking catalyst Cat-A1; the second hydrocracking reaction zone was loaded with a second hydrocracking catalyst Cat-B1; the content of a C₇⁺ n-alkane in the first hydrocracking reaction product was controlled to be 1%.
(2) The reaction product of the second hydrocracking reaction zone in step (1) was subjected to a gas-liquid separation to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil. The process conditions and hydrogenation effects in the example were shown in Table 4.

### Example 2

The example provided a hydrogenation method for kerosene using the process as shown in FIG. 1, the method comprised:
(1) Kerosene was mixed with hydrogen gas and sequentially entered into a first hydrocracking reaction zone and a second hydrocracking reaction zone; the first hydrocracking reaction zone was loaded with a first hydrocracking catalyst Cat-A2; the second hydrocracking reaction zone was loaded with a second hydrocracking catalyst Cat-B2; the content of a C₇⁺ n-alkane in the first hydrocracking reaction product was controlled to be 2%.
(2) The reaction product of the second hydrocracking reaction zone in step (1) was subjected to a gas-liquid separation to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil. The process conditions and hydrogenation effects in the example were shown in Table 4.

### Example 3

The example provided a hydrogenation method for kerosene using the process as shown in FIG. 1, the method comprised:
(1) Kerosene was mixed with hydrogen gas and sequentially entered into a first hydrocracking reaction zone and a second hydrocracking reaction zone; the first hydrocracking reaction zone was charged with a first hydrocracking catalyst Cat-A3; the second hydrocracking reaction zone was loaded with a second hydrocracking catalyst Cat-B1; the content of a C₇⁺ n-alkane in the first hydrocracking reaction product was controlled to be 3%.
(2) The reaction product of the second hydrocracking reaction zone in step (1) was subjected to a gas-liquid separation to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil. The process conditions and hydrogenation effects in the example were shown in Table 4.

### Example 4

The example provided a hydrogenation method for kerosene using the process as shown in FIG. 1, the method comprised:
(1) Kerosene was mixed with hydrogen gas and sequentially entered into a first hydrocracking reaction zone and a second hydrocracking reaction zone; the first hydrocracking reaction zone was charged with a first hydrocracking catalyst Cat-A1; the second hydrocracking reaction zone was loaded with a second hydrocracking catalyst Cat-B2; the content of a C₇⁺ n-alkane in the first hydrocracking reaction product was controlled to be 1%.
(2) The reaction product of the second hydrocracking reaction zone in step (1) was subjected to a gas-liquid separation to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil. The process conditions and hydrogenation effects in the example were shown in Table 4.

### Example 5

The example provided a hydrogenation method for heavy naphtha using the process as shown in FIG. 1, the method comprised:
(1) Heavy naphtha was mixed with hydrogen gas and sequentially entered into a first hydrocracking reaction zone and a second hydrocracking reaction zone; the first hydrocracking reaction zone was charged with a first hydrocracking catalyst Cat-A1; the second hydrocracking reaction zone was loaded with a second hydrocracking catalyst Cat-B1; the content of a C₇⁺ n-alkane in the first hydrocracking reaction product was controlled to be 1.5%.
(2) The reaction product of the second hydrocracking reaction zone in step (1) was subjected to a gas-liquid separation to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil. The process conditions and hydrogenation effects in the example were shown in Table 4.

### Example 6

The example provided a hydrogenation method for kerosene using the process as shown in FIG. 2, the method comprised:
(1) Kerosene was mixed with hydrogen gas and entered into a first hydrocracking reaction zone; the first hydrocracking reaction zone was charged with a first hydrocracking catalyst Cat-A1; the content of a C₇⁺ n-alkane in the first hydrocracking reaction product was controlled to be 1%.
(2) The reaction product of the first hydrocracking reaction zone in step (1) was subjected to a gas-liquid separation to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil; the tail oil entered into a second hydrocracking reaction zone, the second hydrocracking reaction zone was loaded with a second hydrocracking catalyst Cat-B1; the second hydrocracking reaction product was mixed with the first hydrocracking reaction product and separated to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil. The process conditions and hydrogenation effects in the example were shown in Table 4.

### Example 7

(1) Diesel was mixed with hydrogen gas and entered into a first hydrocracking reaction zone; the first hydrocracking reaction zone was loaded with a first hydrocracking catalyst Cat-A1; the content of a C₇⁺ n-alkane in the first hydrocracking reaction product was controlled to be 1.5%.
(2) The reaction product of the first hydrocracking reaction zone in step (1) was subjected to a gas-liquid separation to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil; the tail oil entered into a second hydrocracking reaction zone, the second hydrocracking reaction zone was loaded with a catalyst Cat-B2 and a catalyst Cat-B1, wherein a volume ratio of the catalyst Cat-B2 and the catalyst Cat-B1 was 1:3; the second hydrocracking reaction product was mixed with the first hydrocracking reaction product and separated to obtain a gas phase material flow and a liquid phase material flow, wherein the gas phase material flow was recycled, the liquid phase material flow entered a fractionating column for fractionation to obtain a gas fraction, light naphtha, heavy naphtha, and tail oil. The process conditions and hydrogenation effects in the example were shown in Table 4.

### Comparative Example 1

The hydrogenation method in Comparative Example 1 was carried out according to the method of Example 1, except that the kerosene feedstock was mixed with hydrogen and then directly entered into a second hydrocracking reaction zone and reacted with a catalyst Cat-B1. The process conditions and hydrogenation effects in the example were shown in Table 4.

### Comparative Example 2

The hydrogenation method in Comparative Example 2 was carried out according to the method of Example 1, except that the content of a C₇⁺ n-alkane in the first hydrocracking reaction product was controlled to be 6%. The process conditions and hydrogenation effects in the example were shown in Table 4.

### Comparative Example 3

The hydrogenation method in Comparative Example 3 was carried out according to the method of Example 1, except that the first hydrocracking reaction zone was loaded with a catalyst Cat-B2; the second hydrocracking reaction zone was loaded with a catalyst Cat-B1. The process conditions and hydrogenation effects in the example were shown in Table 4.

### Comparative Example 4

The hydrogenation method in Comparative Example 3 was carried out according to the method of Example 1, except that the first hydrocracking reaction zone was charged with a catalyst Cat-B1; the second hydrocracking reaction zone was loaded with a catalyst Cat-B2. The process conditions and hydrogenation effects in the example were shown in Table 4.

**Table 1. Physico-chemical properties of the first hydrocracking catalyst**

| Catalysts | | Cat-A1 | Cat-A2 | Cat-A3 |
|---|---|---|---|---|
| Pore volume, cm³/g | | 0.35 | 0.45 | 0.25 |
| Specific surface area, m²/g | | 300 | 200 | 400 |

| Content based on the weight of carrier, wt.% | | | | |
|---|---|---|---|---|
| | ZSM-5 | 58 | 42 | 85 |
| | Alumina | 42 | 58 | 15 |

| Content of active metal in the catalyst, wt.% | | | | |
|---|---|---|---|---|
| | MoO₃ | 10.0 | 15.0 | 5.0 |
| | NiO | 3.5 | 2.0 | 5.0 |
| SiO₂/Al₂O₃ molar ratio of ZSM-5 molecular sieve | | 40 | 60 | 20 |

**Table 2. Physico-chemical properties of the second hydrocracking catalyst**

| Properties of catalyst | Cat-B 1 | Cat-B2 |
|---|---|---|
| Pore volume, cm³/g | 0.35 | 0.35 |
| Specific surface area, m²/g | 300 | 300 |

| Catalyst composition and content | | |
|---|---|---|
| Beta molecular sieve, wt.% | 50 | - |
| Y molecular sieve, wt.% | - | 50 |
| MoO₃, wt.% | 10 | 10 |
| NiO, wt.% | 5 | 5 |
| Alumina, wt.% | 35 | 35 |

**Table 3. Key properties of the feedstock**

| Name of feedstock oil | | Kerosene | Heavy naphtha | Diesel |
|---|---|---|---|---|
| Density (20°C) /kg·m⁻³ | | 788.3 | 743.8 | 853.9 |

| Distillation range/°C (ASTM D86) | | | | |
|---|---|---|---|---|
| | IBP/10% | 162/184 | 59/101 | 206/265 |
| | 30%/50% | 196/205 | 119/132 | 292/308 |
| | 70%/90% | 215/231 | 145/158 | 322/340 |
| | 95%/EBP | 238/246 | 163/173 | 348/353 |
| Normal hydrocarbons, wt.% | | 24 | 19 | 26.6 |
| Cyclic hydrocarbons, wt.% | | 42 | 42 | 53.8 |
| Bicyclic and above cyclic hydrocarbons, wt.% | | 8 | 0 | 20.5 |
| Nitrogen content, mg/kg | | 20 | 1.2 | 200 |

**Table 4 Hydrogenation conditions and effects**

| Numbers | Exampl e 1 | Exampl e 2 | Exampl e 3 | Exampl e 4 | Exampl e 5 | Exampl e 6 | Exampl e 7 |
|---|---|---|---|---|---|---|---|
| First hydrocrackin g reaction zone | | | | | | | |
| Catalysts | Cat-A1 | Cat-A2 | Cat-A3 | Cat- A1 | Cat-A1 | Cat-A1 | Cat-A1 |
| Reaction temperature/ °C | 375 | 365 | 360 | 375 | 375 | 375 | 375 |
| Reaction pressure/MP a | 3.0 | 2.0 | 3.0 | 3.0 | 3.0 | 3.0 | 8.0 |
| Hydrogen-oi l volume ratio | 800 | 800 | 800 | 800 | 800 | 800 | 800 |
| Content of C₇⁺ n-alkane, % | 1 | 2 | 3 | 1 | 1.5 | 1 | 1.5 |
| Liquid hourly space velocity/h⁻¹ | 3.0 | 3.0 | 3.0 | 3.0 | 3.0 | 3.0 | 3.0 |

| Second hydrocrackin g reaction zone | | | | | | | |
|---|---|---|---|---|---|---|---|
| Catalysts | Cat-B 1 | Cat-B2 | Cat-B 1 | Cat-B2 | Cat-B 1 | Cat-B 1 | Cat-B2 / Cat-B 1 |
| Reaction temperature/ °C | 390 | 390 | 390 | 390 | 390 | 380 | 380 |
| Reaction pressure/MP a | 3.0 | 2.0 | 3.0 | 3.0 | 3.0 | 3.0 | 8.0 |
| Hydrogen-oi l volume ratio | 1000 | 1000 | 1000 | 1000 | 1000 | 1000 | 1000 |
| Liquid hourly space velocity/h⁻¹ | 2.0 | 2.0 | 2.0 | 2.0 | 2.0 | 2.0 | 2.0 |
| Mass ratio of C₆-C₈ cyclic hydrocarbon s in product / cyclic hydrocarbon s in feedstock | 0.42 | 0.38 | 0.39 | 0.40 | 0.52 | 0.43 | 0.34 |

| Main product | | | | | | | |
|---|---|---|---|---|---|---|---|
| Yield of low-carbon olefin raw material, wt.% | 72 | 67 | 64 | 65 | 75 | 69 | 73 |
| Content of n-alkane in low-carbon olefin raw material, % | 65 | 60 | 55 | 58 | 60 | 62 | 67 |
| Yield of heavy naphtha, wt.% | 28 | 33 | 36 | 35 | 24 | 31 | 27 |
| Potential content of aromatic hydrocarbon s in heavy naphtha, wt% | 67 | 63 | 59 | 60 | 65 | 67 | 67 |
| BTX yield, % | 55 | 52 | 47 | 48 | 54 | 55 | 55 |
| Yield of the three olefins, % | 58 | 55 | 52 | 53 | 55 | 56 | 57 |

**Table 4 Hydrogenation conditions and effects (Continued)**

| Numbers | Comparative Example 1 | Comparative Example 2 | Comparative Example 3 | Comparative Example 4 |
|---|---|---|---|---|
| First hydrocracking reaction zone | | | | |
| Catalysts | / | Cat-A1 | Cat-B2 | Cat-B 1 |
| Reaction temperature/°C | / | 320 | 360 | 380 |
| Reaction pressure/MPa | / | 4.0 | 4.0 | 4.0 |
| Hydrogen-oil volume ratio | / | 800 | 800 | 800 |
| Content of C₇⁺ n-alkane, % | / | 6 | 17 | 15 |
| Liquid hourly space velocity/h⁻¹ | / | 3.0 | 3.0 | 3.0 |

| Second hydrocracking reaction zone | | | | |
|---|---|---|---|---|
| Catalysts | Cat-B 1 | Cat-B 1 | Cat-B 1 | Cat-B2 |
| Reaction temperature/°C | 380 | 380 | 380 | 380 |
| Reaction pressure/MPa | 3.0 | 4.0 | 4.0 | 4.0 |
| Hydrogen-oil volume ratio | 1000 | 1000 | 1000 | 1000 |
| Liquid hourly space velocity/h⁻¹ | 2.0 | 2.0 | 2.0 | 2.0 |
| Mass ratio of C₆-C₈ cyclic hydrocarbons in product / cyclic hydrocarbons in feedstock | 0.28 | 0.33 | 0.29 | 0.27 |

| Main product | | | | |
|---|---|---|---|---|
| Yield of low-carbon olefin raw material, wt.% | 56 | 59 | 57 | 58 |
| Content of n-alkane in low-carbon olefin raw material, % | 26 | 46 | 24 | 25 |
| Yield of heavy naphtha, wt% | 44 | 41 | 43 | 42 |
| Potential content of aromatic hydrocarbons in heavy naphtha, wt.% | 45 | 50 | 46 | 47 |
| BTX yield, % | 32 | 35 | 32.5 | 33 |
| Yield of the three olefins, % | 48 | 49 | 46 | 47 |

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A hydrogenation method for a hydrocarbon oil, is **characterized in that** the method comprises the following steps:
(1) subjecting a hydrocarbon oil raw material to a first hydrocracking reaction in the presence of hydrogen, so as to obtain a first hydrocracking reaction product, wherein the mass content of a C₇⁺ n-alkane in the first hydrocracking reaction product is 5% or below;
(2) subjecting the first hydrocracking reaction product to a second hydrocracking reaction in the presence of hydrogen, so as to obtain a second hydrocracking reaction product;
(3) separating and fractionating the second hydrocracking reaction product.

2. The method according to claim 1, wherein the mass content of a C₇⁺ n-alkane in the first hydrocracking reaction product is within the range of 0.1-5%, preferably within the range of 0.5-4.5%.

3. The method according to claim 1, wherein the mass ratio of the C₆-C₈ monocyclic cyclic hydrocarbons in the second hydrocracking reaction product to the total cyclic hydrocarbons in the hydrocarbon oil raw material is within the range of 0.4-0.7, preferably within the range of 0.45-0.6.

4. The method according to any one of claims 1-3, wherein the mass content of n-alkane in the hydrocarbon oil raw material is within the range of 5%-60%, preferably within the range of 10%-40%;
preferably, the mass content of cyclic hydrocarbons in the hydrocarbon oil raw material is within the range of 20%-90%; the mass content of bicyclic and above cyclic hydrocarbons in the hydrocarbon oil raw material is within the range of 0%-80%;
preferably, the hydrocarbon oil raw material is at least one selected from the group consisting of naphtha, diesel, kerosene, and wax oil;
preferably, the nitrogen content of the reactant stream for performing the first hydrocracking reaction is 50 mg/kg or below, further preferably 20 mg/kg or below.

5. The method according to any one of claims 1-4, wherein the first hydrocracking reaction is performed in the presence of a first hydrocracking catalyst comprising an active metal component and a carrier, the carrier comprises a molecular sieve capable of selectively cracking n-alkane, the molecular sieve is preferably at least one selected from the group consisting of a ZSM-5 molecular sieve, a ZSM-11 molecular sieve, a ZSM-12 molecular sieve, a ZSM-22 molecular sieve, a ZSM-23 molecular sieve, a ZSM-35 molecular sieve, and a ZSM-38 molecular sieve, further preferably a ZSM-5 molecular sieve;
preferably, the active metal component comprises at least one of a group VIB metal and a group VIII metal; further preferably, the group VIB metal is molybdenum and/or tungsten, and the group VIII metal is cobalt and/or nickel.

6. The method according to claim 5, wherein the content of said group VIB metal calculated in terms of oxide is within the range of 5 wt.% - 15 wt.%, the content of said group VIII metal calculated in terms of oxide is within the range of 2 wt.% - 5 wt.%, and the content of said carrier is within the range of 80 wt.% - 93 wt.%, based on the weight of the first hydrocracking catalyst; the content of said molecular sieve is within the range of 40 wt.% - 92 wt.%, based on the weight of the carrier.

7. The method according to any of claims 1-6, wherein the reaction conditions of the first hydrocracking reaction comprise: a reaction pressure of 1-25MPa, preferably 2-18MPa; an average reaction temperature of 250-450°C, preferably 300-400°C; a liquid hourly volume space velocity of 0.1-15 h⁻¹, preferably 1-5 h⁻¹; and a hydrogen-oil volume ratio within the range of (100-2,500): 1, preferably (400-2,000): 1.

8. The method according to any one of claims 1-7, wherein the method comprises separating and fractionating the first hydrocracking reaction product, and subjecting the obtained tail oil fraction to the second hydrocracking reaction in step (2);
preferably, the first hydrocracking reaction product and the second hydrocracking reaction product share the same set of separation and fractionation systems.

9. The method according to any one of claims 1-8, wherein the second hydrocracking reaction is performed in the presence of a second hydrocracking catalyst comprising a cracking component, a hydrogenation component, and a binder; the cracking component comprises an acidic molecular sieve, preferably a Beta molecular sieve and/or a Y molecular sieve, further preferably a Beta molecular sieve and optionally a Y molecular sieve;
preferably, the content of said hydrogenation component in terms of oxide in the second hydrocracking catalyst is within the range of 5 wt.% - 40 wt.%, preferably within the range of 10 wt.% - 20 wt.%, the content of said cracking component is within the range of 20 wt.% - 80 wt.%, preferably within the range of 30 wt.% - 70 wt.%; and the content of said binder is within the range of 5 wt.% - 75 wt.%, preferably within the range of 10 wt.% - 50 wt.%, based on the weight of said second hydrocracking catalyst.

10. The method according to any one of claims 1-9, wherein the reaction conditions of the second hydrocracking reaction comprise: a reaction pressure of 1-25MPa, preferably 2-18MPa; an average reaction temperature of 250-450°C, preferably 300-400°C; a liquid hourly space velocity of 0.1-15 h⁻¹, preferably 1-5 h⁻¹; and a hydrogen-oil volume ratio within the range of (100-2,500): 1, preferably (400-2,000): 1.

11. The method according to any one of claims 1-10, wherein a gas fraction, light naphtha, heavy naphtha, and tail oil are obtained from the separating and fractionating in step (3);
preferably, the n-alkane content is within the range of 50%-70%, preferably within the range of 54%-70%, based on the total mass of the gas fraction and the light naphtha;
preferably, the method further comprises recycling the tail oil to step (1) for performing the first hydrocracking reaction and/or recycling the tail oil to step (2) for performing the second hydrocracking reaction.

12. The method according to claim 11, wherein the method further comprises using at least part of the gas fraction and/or the light naphtha as the raw material for producing low-carbon olefins;
preferably, the method further comprises subjecting at least part of the gas fraction and/or the light naphtha to the steam cracking reaction for producing ethylene, ethane dehydrogenation reaction, or propane dehydrogenation reaction;
preferably, the method further comprises subjecting at least part of the heavy naphtha to a catalytic reforming;
preferably, the catalytic reforming is semi-regenerative reforming, continuous reforming, or cyclic regenerative reforming;
preferably, the conditions of the catalytic reforming reaction comprise: a reaction temperature of 480-530°C, a reaction pressure of 0.35-1.5MPa, a hydrogen-hydrocarbon molar ratio of 2-8, and a volume hourly space velocity of 1-6 h⁻¹;
preferably, the catalytic reformer comprises a dehydrogenation reaction zone of six-membered cycloalkanes and an isomerization dehydrogenation reaction zone of five-membered cycloalkanes, excluding an alkane cyclization and dehydrogenation reaction zone.

13. A hydrogenation system for a hydrocarbon oil, is **characterized in that** the system comprises a first hydrocracking catalyst bed, a second hydrocracking catalyst bed, a gas-liquid separation unit, and a fractionation unit arranged in sequence along the direction of material flow;
wherein the first hydrocracking catalyst bed is loaded with a first hydrocracking catalyst, and the second hydrocracking catalyst bed is loaded with a second hydrocracking catalyst; the first hydrocracking catalyst includes a molecular sieve capable of selectively cracking n-alkane.

14. The system according to claim 13, wherein the first hydrocracking catalyst bed is used for subjecting a hydrocarbon oil raw material to a first hydrocracking reaction to obtain a first hydrocracking reaction product, the mass content of a C₇⁺ n-alkane is 5% or below, preferably within the range of 0.1-5%;
preferably, the molecular sieve capable of selectively cracking n-alkane is at least one selected from the group consisting of a ZSM-5 molecular sieve, a ZSM-11 molecular sieve, a ZSM-12 molecular sieve, a ZSM-22 molecular sieve, a ZSM-23 molecular sieve, a ZSM-35 molecular sieve, and a ZSM-38 molecular sieve, further preferably a ZSM-5 molecular sieve.

15. The system according to claim 13, wherein the second hydrocracking catalyst bed is used for subjecting a second hydrocracking reaction product to a second hydrocracking reaction to obtain a second hydrocracking reaction product, and the mass ratio of the C₆-C₈ monocyclic cyclic hydrocarbons in the second hydrocracking reaction product to the total cyclic hydrocarbons in the hydrocarbon oil raw material is within the range of 0.4-0.7, preferably within the range of 0.45-0.6;
preferably, the second hydrocracking catalyst comprises a Beta molecular sieve and/or a Y molecular sieve, further preferably a Beta molecular sieve and optionally a Y molecular sieve.

16. The system according to any one of claims 13-15, wherein the gas-liquid separation unit is provided with a gas phase material flow outlet and a liquid phase material flow outlet, the liquid phase material flow outlet of the gas-liquid separation unit is in communication with an inlet of the fractionation unit;
the fractionation unit is provided with a gas fraction outlet, a light naphtha outlet, a heavy naphtha outlet, and a tail oil outlet;
preferably, the tail oil outlet is in communication with an inlet of the first hydrocracking catalyst bed and/or an inlet of the second hydrocracking catalyst bed such that the tail oil obtained from the fractionation unit is subjected to a first hydrocracking reaction in the first hydrocracking catalyst bed and/or a second hydrocracking reaction in the second hydrocracking catalyst bed.

17. The system according to claim 16, wherein the system further comprises a low carbon hydrocarbon production device and/or a catalytic reformer, an inlet of the low carbon hydrocarbon production device is in communication with the gas fraction outlet and/or the light naphtha outlet; the catalytic reformer is in communication with the heavy naphtha outlet;
preferably, the low carbon hydrocarbon production device comprises at least one of a steam cracking device for producing ethylene, an ethane dehydrogenation device, and a propane dehydrogenation device;
preferably, the catalytic reformer comprises a dehydrogenation reaction zone of six-membered cycloalkanes and an isomerization dehydrogenation reaction zone of five-membered cycloalkanes, excluding an alkane cyclization and dehydrogenation reaction zone.
